# EUROPÄISCHE PATENTSCHRIFT

(11) **EP 2 216 636 B1**
(45) Veröffentlichungstag und Bekanntmachung des Hinweises auf die Patenterteilung: **08.08.2012**
(21) Anmeldenummer: 09152477.7
(22) Anmeldetag: 10.02.2009
(51) Int. Cl.: G01K 11/06

(54) **Auftauanzeigevorrichtung, Herstellungsverfahren und Gefriergutverpackung**
Thaw display device, production method and frozen good packaging
Dispositif d'affichage de décongélation, procédé de fabrication et emballage de marchandise de congélation

(43) Veröffentlichungstag der Anmeldung: 11.08.2010
(73) Patentinhaber: Wötzer, Philipp, 6416 Obsteig (AT)
(72) Erfinder: Wötzer, Philipp, 6416 Obsteig (AT)
(74) Vertreter: Vossius & Partner

(56) Entgegenhaltungen:
- EP-A- 1 281 946
- DE-A1- 2 547 638
- FR-A- 2 739 687
- US-A- 2 971 852
- US-A- 4 163 427
- US-B1- 7 036 452

## Beschreibung

Die Erfindung betrifft eine Anzeigevorrichtung zum irreversiblen Anzeigen einer nicht ordnungsgemäßen Lagerung eines Gutes, insbesondere eines Gefriergutes. Insbesondere betrifft die Erfindung eine Vorrichtung zur irreversiblen Anzeige einer nicht ordnungsgemäßen zeitweiligen Überschreitung der Lagerhöchsttemperatur eines Gutes, wie etwa eines Gefriergutes. Ferner betrifft die Erfindung ein Verfahren zur Herstellung einer solchen irreversiblen Anzeigevorrichtung, sowie eine Verpackung, insbesondere eine Gefriergutverpackeng, mit einer erfindungsgemäßen Anzeigevorrichtung.

Tiefgefrorene Lebensmittel und pharmazeutische Produkte, welche eine gewisse Lagertemperatur überschritten haben, können nicht ohne Qualitätseinbußen erneut tiefgefroren bzw. gekühlt werden. Tiefgefrorene Lebensmittel, die versehentlich die Lagerhöchsttemperatur überschritten haben, können unter Umständen nicht mehr verwendet werden und pharmazeutische Produkte, deren Lagertemperatur für eine gewisse Zeit überschritten wurde, verlieren beispielsweise zumindest teilweise ihre Wirksamkeit. Es sind daher im Stand der Technik verschiedene Anzeigevorrichtungen beschrieben worden, um die Überschreitung der Lagerhöchsttemperatur anzuzeigen.

Beispielsweise beschreibt die US-A-4 022 149 eine Auftau-Anzeigevorrichtung, die aus einer zerbrechlichen Kapsel besteht. Die Anzeigevorrichtung wird auf die Außenseite der Gefriergutverpackung aufgeklebt. Die Kapsel besteht aus Lebensmittelwachs. In der Kapsel befindet sich eine Mischung aus Gelatine und gefärbtem Wasser. Außerdem ist die Kapsel von einer löschpapierartigen Absorptionsschicht umgeben. Beim Gefrieren des mit der Auftau-Anzeigevorrichtung versehenen Gefriergutes dehnt sich das Gelatine-Wasser-Gemisch aus und sprengt die Wachskapsel. Das Gelatine-Wasser-Gemisch gefriert zu diesem Zeitpunkt jedoch selbst und kontaminiert die absorbierende Schicht nicht. Erst beim Auftauen des Gefriergutes verflüssigt sich auch das Gelatine-Wasser-Gemisch wieder, wird von der absorbierenden Schicht absorbiert und zeigt somit dem Kunden an, dass ein gegebenenfalls unerwünschter Auftauvorgang stattgefunden hat.

Die WO-A-2008/037478 zeigt eine weitere Anzeigevorrichtung. Beispielsweise ist dort eine Anzeigevorrichtung beschrieben, die eine gitter- oder maschenartige Trägerschicht für eine Anzeigesubstanz aufweist. Außerdem ist ein Anzeigeelement vorgesehen, das entfernt von der Anzeigesubstanz-Trägcrschicht angeordnet ist. Die Anzeigesubstanz-Trägerschicht und das Anzeigeelement stehen über eine Transportbahn in Verbindung. Sobald die Anzeigesubstanz-Trägerschicht die darin enthaltene AnzeigeflüssIgkeit bei Überschreiten der Lagerhöchsttemperatur freigibt, gelangt diese über die Transportbahn zu dem Anzeigeelement. Dort kann beispielsweise dann eine Verfärbung stattfinden, die von außen sichtbar ist.

Derartige Anzeigevorrichtungen haben sich jedoch in der Praxis als sehr aufwändig herstellbar erwiesen.

US4163427, DE2547638 und FR2739687 offenbaren bekannte Vorrichtungen zur irreversiblen Anzeige einer nicht ordnungsgemäßen zeitweiligen Überschreitung der Lagerhöchsttemperatur eines Gutes, mit einer Farbstoff enthaltenden Schicht, wobei der Farbstoff in Flüssigkeit auflösbar ist, mit einer bei Überschreitung eines vorher festgelegten Temperatur-Schwellenwertes eine Flüssigkeit abgebenden Schicht, und mit einer Deckschicht. In diesen Dokumenten wird die Flüssigkeit abgebende Schicht als Eisschicht oder als absorbierende Schicht implementiert, wie z.B. Silikagel, Carbon Black oder poröses Polyurethan.

Der Erfindung liegt die Aufgabe zugrunde, eine Anzeigevorrichtung bereitzustellen, die nicht nur hinsichtlich ihrer Herstellbarkeit, sondern auch hinsichtlich der Zuverlässigkeit der Anzeige wesentlich verbessert ist, sowie eine Gutverpackung und ein Herstellungsverfahren bereitzustellen. Diese Aufgabe wird mit den Merkmalen der Patentansprüche gelöst.

Die erfindungsgemäße Vorrichtung zur irreversiblen Anzeige einer nicht ordnungsgemäßen zeitweiligen Überschreitung der Lagerhöchsttemperatur eines Gutes, insbesondere eines Gefriergutes weist eine erste, einen Farbstoff enthaltende Schicht auf. Der in dieser Schicht enthaltene Farbstoff ist lösbar, sobald die Schicht mit einer Flüssigkeit in Kontakt kommt. Ferner ist eine zweite Schicht vorgesehen, die bei Überschreitung eines vorher festgelegten Temperatur-Schwelienwertes eine Flüssigkeit abgibt (Flüssigkeitsspeicherschicht) wobei die Flüssigkeit abgebende Schicht aus einer Wollwachs-Flüssigkeit-Mischung besteht. Ferner ist noch eine Deckschicht vorgesehen.

Die einzelnen Schichten sind vorzugsweise auf einer Trägerschicht angeordnet, wobei diese Trägerschicht beispielsweise durch die Oberfläche der Verpackung des Gutes gebildet ist. Die einzelnen Schichten sind übereinander angeordnet, im Sinne eines mehrlagigen Aufbaus bzw. in Art einer Laminatstruktur. Die Reihenfolge der Schichten in dieser Mehrschichtstruktur kann unterschiedlich sein, wie dies im Folgenden noch detailliert erläutert wird.

Grundgedanke der Erfindung ist, dass die den Farbstoff enthaltende Schicht mit der Flüssigkeitsspeicherschicht kontrolliert zusammenwirkt. In der den Farbstoff enthaltenden Schicht ist der Farbstoff derart enthalten bzw. gebunden, dass diese Schicht den Farbstoff erst bei Inkontakttreten mit einer Flüssigkeit freigibt bzw. löst. Bei der erfindungsgemäßen Anzeigevorrichtung ist diese, den Farbstoff lösende Flüssigkeit in der Flüssigkeitsspeicherschicht enthalten. Die Flüssigkeitsspeicherschicht gibt diese Flüssigkeit jedoch erst bei Überschreiten eines festgelegten Temperatur-Schwellenwertes ab. Solange sich die Anzeigevorrichtung, d.h. die damit versehene Verpackung bzw. das damit versehene Gut, unterhalb dieses Temperatur-Schwellenwertes befindet, ist die Flüssigkeit in der Flüssigkettsspeicherschicht gebunden. Beispielsweise liegt die Flüssigkeit in der Flüssigkeitsspeicherschicht im gefrorenen Zustand vor und taut erst auf, nachdem der Temperatur-Sehwellenwert überschritten ist. Sobald die Flüssigkeit jedoch freigegeben ist, also beispielsweise vom gefrorenen, festen Zustand in den flüssigen Zustand übergeht, tritt sie mit der den Farbstoff enthaltenden Schicht in Wirkverbindung und löst aus dieser Schicht den Farbstoff heraus. Dieser herausgelöste Farbstoff dient dann dazu, die nicht ordnungsgemäße zeitweilige Überschreitung der Lagerhöchsttemperatur anzuzeigen.

Die Lagerhöchsttemperatur bzw. der festgelegte Temperaturschwellenwert hängt von dem gewünschten Temperaturbereich ab, in dem das Gut gelagert werden soll bzw. muss, um als ordnungsgemäß gelagert zu gelten. Im Fall von Gefriergut ist dies beispielsweise die Maximaltemperatur, die in der Kühlkette nicht nach oben überschritten werden darf, zumindest nicht für einen längeren Zeitraum. Bei Gütern wie beispielsweise Lebensmitteln oder Medikamenten, die bei Raumtemperatur ordnungsgemäß gelagert werden (beispielsweise Schokolade), diese aber nicht überschreiten sollen, ist die Raumtemperatur oder eine definiert darüberliegende Temperatur (um eine gewisse Schwankung zuzulassen) als Lagerhöchsttemperatur bzw. Temperatur-Schwellenwert anzusehen. Diese Einstellung des "Gefrierpunktes" in dem vom zu überwachenden Gut abhängigen gewünschten Temperaturbereich bzw. Temperaturwert wird durch geeignete Wahl der Flüssigkeit bzw. der ftüssigkeitspeichemden Schicht erreicht. Dies führt dann dazu, dass bei Unterschreiten dieser gewünschten Temperatur die Flüssigkeit gebunden ist bzw. in einer festen Phase vorliegt. Die Anzeigevorrichtung wird erst dann aktiviert, sobald die Temperatur des (Gefrier-)Gutes diesen Temperaturbereich bzw. Temperatur-Schwellenwert wieder überschreitet, also das Gut "auftaut". Dann geht die Flüssigkeit in die flüssige Phase über und die gewünschte Anzeige, dass ein solcher Auftauvorgang stattgefunden hat, wird durch Lösen des Farbstoffes initiiert.

Durch geeignete Wahl der Flüssigkeitsspeicherschicht und/oder des verwendeten Farbstoffes wird vorzugsweise gezielt eine Verzögerungsfunktion bereitgestellt. Eine solche Verzögerungsfunktion ist von Vorteil, um Temperaturschwankungen an der Oberfläche der Verpackung des Gutes aufgrund der Umgebungstemperatur (beispielsweise bei kurzzeitiger Sonneneinstrahlung oder Handwärme) zu puffern. Derartige lokale Temperaturerhöhungen erreichen das in der Verpackung enthaltene Gut in der Regel nicht bzw. führen nicht zu einem vollständigen unerwünschten Auftauen des Gutes. Sollte jedoch dabei die Flüssigkeitsspeicherschicht zumindest teilweise kurzzeitig den Gefrierpunkt überschreiten, verhindert die Verzögerungsfunktion ein verfrühtes Freigeben der Flüssigkeit und somit eine verfrühte, irrtümliche Anzeige.

Für die Flüssigkeitsspeicherschicht hat sich eine Emulsion umfassend zwei oder mehr Flüssigkeiten als vorteilhaft herausgestellt. Bevorzugt handelt es sich bei der Emulsion um eine Emulsion umfassend (i) eine hydrophile Flüssigkeit oder ein Gemisch aus zwei oder mehr hydrophilen Flüssigkeiten und (ii) eine hydrophobe Flüssigkeit oder ein Gemisch aus zwei oder mehr hydrophoben Flüssigkeiten,

Als hydrophile Flüssigkeiten können z.B. Wasser, Polyole (vorzugsweise C₂₋₁₅-Potyole, die mindestens zwei Hydroxylgruppen aufweisen; nichtlimitierende Beispiele sind Glycole, beispielsweise Alkylenglycole, wie etwa Ethylenglycol, Diethylenglycol, Propylenglykol, Butylenglycol, Hexylenglycol oder Polyethylenglycole (PEG) mit einem durchschnittlichen Molekulargewicht von 100 bis 1000 Da; Triole, wie etwa Glycerin; und Tetraole), Dimethylformamid, Dimethylacetamid, Dimethylsulfoxid, N-Methyl-2-pyrrolldon, Glycolether, C₁₋₅-Alkohole, Triacetin oder Gemische davon verwendet werden. Bevorzugt werden Wasser, Polyole oder Gemische davon verwendet; mehr bevorzugt wird Wasser verwendet.

Als hydrophobe Flüssigkeiten können z.B. Wachse (beispielsweise Wollwachs, Bienenwachs, Sojawachs, Zuckerrohrwachs, Carnaubawachs, Candelillawachs oder Japanwachs), Fette, Öle, Triglyceride (vorzugsweise auf C₆₋₂₂-Fettsäuren basierende Triglyceride), Ester von linearen oder verzweigten Fettsäuren mit linearen oder verzweigten Alkoholen (vorzugsweise Ester von linearen oder verzweigten C₆₋₂₂-Fettsäuren mit linearen oder verzweigten C₆₋₂₂-Fettalkoholen; nichtlimitierende Beispiele sind Myristylmyristat, Myristylpalmitat, Myristylstearat, Myristylsostearat, Myristyloleat, Myristylbehenat, Myristylerucat, Cetylmyristat, Cetylpalmitat, Cetylstearat, Cetylisostearat, Cetyloleat, Cetylbehenat, Cetylerucat, Stearylmyristat, Stearylpalmitat, Stearytstearat, Stearylisostcarat, Stearyloleat, Stearylbehenat, Stearylerucat, Isostearylmyristat, Isostearylpalmitat, Isostearylstearat, Isostearylisostearat, Isostearyloleat, Isostearylbehenat, Isostearyloleat, Oleylmyristat, Oleylpalmitat, Oleylstearat, Oleylisostearat, Oleyloleat, Oleylbehenat, Oleylerucat, Behenylmyristat, Behenylpalmitat, Behenylstearat, Behenylisostearat, Behenyloleat, Behenylbehenat, Behenylerucat, Erucylmyristat, Erucylpalmitat, Erucylstearat. Erucylisostearat, Erucyloleat, Erucylbehenat oder Erucylerucat), gesättigte oder ungesättigte C₆₋₃₆-Alkohole, Ether (vorzugsweise Ether mit 4 bis 36 Kohlenstoffatomen; nichtlimitierende Beispiele sind Diethylether, Dibutylether, Anisol, Dioxan oder Tetrahydrofuran), Ketone (vorzugsweise Ketone mit 3 bis 36 Kohlenstoffatomen; nichtlimitierende Beispiele sind Aceton, Butanon oder Cyclohexanon) oder Gemische davon verwendet werden.

Emulsionen können umfassend eine hydrophile Flüssigkeit oder ein Gemisch aus zwei oder mehr hydrophilen Flüssigkeiten und eine hydrophobe Flüssigkeit oder ein Gemisch aus zwei oder mehr hydrophoben Flüssigkeiten in Mischungsverhältnissen von 1:1 (1 Volumenteil einer hydrophilen Flüssigkeit oder eines Gemisches aus zwei oder mehr hydrophilen Flüssigkeiten und 1 Volumenteile einer hydrophoben Flüssigkeit oder eines Gemisches aus zwei oder mehr hydrophoben Flüssigkeiten) bis 100:1 (100 Volumenteile einer hydrophilen Flüssigkeit oder eines Gemisches aus zwei oder mehr hydrophilen Flüssigkeiten und 1 Volumenteil einer hydrophoben Flüssigkeit oder eines Gemisches aus zwei oder mehr hydrophoben Flüssigkeiten) verwendet werden; bevorzugt sind Mischungsverhältnisse von 1:1 1 bis 50:1; mehr bevorzugt sind Mischungsverhältnisse von 1:1 1 bis 20:1; noch mehr bevorzugt sind Mischungsverhältnisse von 1:1 bis 10:1.

Weiterhin kann die für die Flüssiglceitsspeicherschicht verwendete Emulsion einen Emulgator umfassen, wie beispielsweise einen nichtionischen Emulgator, einen anionischen Emulgator, einen kationischen Emulgator oder einen amphoteren Emulgator. Nichtlimitierende Beispiele sind Natriumlaurylsulfat (SDS), Cetyltrimethylammoniumbromid (CTAB), Octoxinol-9 (Triton), Polysorbat 20, Polysorbat 40, Polysorbat 60, Polysorbat 65, Polysorbat 80, Polyalkylenglykolether, Cholat, Desoxycholat, Digitonin, Dodecylmaltosid, Octylglycosid oder Lecithin.

In einer besonders bevorzugten Ausführungsform der vorliegenden Erfindung wird für die Flüssigkeitsspeicherschicht eine Mischung umfassend eine hydrophile Flüssigkeit und ein Wollwachs verwendet. Bevorzugt ist dabei eine Wachs-Wasser-Mischung, mehr bevorzugt eine Wolllwachs (adeps lanae)-Wasser-Mischung. Im Fall einer Wollwachs-Wasser-Mischung ist ein Mischungsverhältnis von 1:1 (1 Volumenteil Wasser und 1 Volumenteil Wollwachs) bis 10:1 (10 Volumenteile Wasser und 1 Volumenteil Wollwachs) als bevorzugt, ein Mischungsverhältnis von 4:1 bis 7:1 als mehr bevorzugt und ein Mischungsverhältnis von 6:1 (6 Volumenteile Wasser und 1 Volumenteil Wollwachs) als besonders bevorzugt anzusehen. Durch das Mischungsverhältnis kann die gewünschte Verzögerungswirkung gesteuert werden. So reagiert beispielsweise eine Wasser- Wollwachs -Mischung im Verhältnis 5:1 träger als eine 6:1-Mischung. Dementsprechend wird ein geeignetes Mischungsverhältnis in Abhängigkeit des Gutes ausgewählt.

Als Wollwachs eignet sich beispielsweise das von der Firma Brenntag Cee GmbH erhältliche Wollwachs Cera Lanae.

Vorzugsweise sind in die Wasser-Wollwachs-Mischung Fasern, Pulver oder Papierpulver eingemischt. Dies beschleunigt die Anzeige.

Für die Herstellung der Wachs-Wasser-Mischung werden vorzugsweise das Wachs, wie etwa das Wollwachs, und das Wasser auf einen Temperaturbereich zwischen 50 und 70°C erwärmt und für einen Zeitraum von etwa 10 bis 30 Minuten langsam durch fortwährendes Rühren vermischt. Besonders bevorzugt ist dabei ein Rühren mit 8000 bis etwa 12000 Umdrehungen/Minute. Sobald die gemischte Substanz eine feste cremige Masse ergibt, ist die Flüssigkeit in ausreichendem Maße im Wachs gebunden.

Die Wachs-Wasser-Mischung weist vorzugsweise einen weiteren Bestandteil zur Verhinderung von Keimbildung auf, wie etwa Wasserstoffperoxid.

Die den Farbstoff enthaltende Schicht kann erfindungsgemäß auf verschiedene Arten bereitgestellt werden. Hierfür kann eine Schicht aus einem oder mehreren hydrophilen Polymeren verwendet werden, welche einen entsprechenden Farbstoff enthält. Als hydrophile Polymere für die den Farbstoff enthaltende Schicht können erfindungsgemäß beispielsweise Polysaccharide oder Polypeptide verwendet werden. Unter den Polysacchariden können bevorzugt Polyurone (insbesondere Pektine, einschließlich Pektinsäuren und Amidopektinen; Alginate, einschließlich Propylenglycolaigmat; oder Gummi arabicum), Agar, Carrageen (insbesondere kappa-Carrageen oder iota-Carrageen), Guaran oder Stärke verwendet werden. Unter den Polypeptiden kann beispielsweise Gelatine für die den Farbstoff enthaltende Schicht verwendet werden. In einer Ausführungsform der vorliegenden Erfindung wird für die den Farbstoff enthaltende Schicht bevorzugt eine Schicht aus Agar, Polyuron, Stärke oder Gelatine verwendet, die einen entsprechenden Farbstoff enthält; mehr bevorzugt eine Schicht aus Agar oder Gelatine, die einen entsprechenden Farbstoff enthält; besonders bevorzugt eine Schicht aus Agar, die einen entsprechenden Farbstoff enthält. Alternativ dazu kann die den Farbstoff enthaltende Schicht Lebensmittelfarbe, Farbpulver, Wasserfarbe, Indikatorfarbe oder Farbmischungen umfassen, die bei der Herstellung der Anzeigevorrichtung auf eine Trägerschicht aufgetragen oder aufgesprüht wird und anschließend im trockenen bzw. getrockneten Zustand von der Flüssigkeitsspeicherschicht bedeckt wird. Im genannten Beispiel von Agar wird dieses eingefärbt, auf die Trägerschicht aufgesprüht und anschließend getrocknet. Als besonders vorteilhaft hat sich hier eine Mischung von 1-2 % erwiesen. Die verwendung einer derartigen Lage bzw. Bahn aus einem oder mehreren gefärbten hydrophilen Polymeren, wie etwa aus gefärbtem Agar, ist vorteilhaft, da die von der Flüssiglceitsspeicherschicht freigegebene Flüssigkeit lediglich den Farbstoff aus der Polymerlage (beispielsweise der Agarlage) herauslöst, die Lage selbst jedoch in der Anzeigevorrichtung bestehen bleibt.

Die Flüssigkeitsspeicherschicht kann beispielsweise mittels Siebdruckverfahren direkt aufgetragen werden oder kann in Form einer gitter-, netz-, wabenartigen oder gewebten Struktur vorliegen, in deren Gitterzwischenräumen Waben bzw. Maschen das die Flüssigkeit speichernde bzw. abgebende Material, wie etwa die Wachs-Wasser-Mischung, aufgenommen ist bzw. imprägniert ist.

Die Deckschicht kann aus einer Folie bestehen oder aus einer auf die darunter liegenden Schichten aufgetragenen Lackschicht.

Die Trägerschicht besteht vorzugsweise aus einer Folienlage, Karton, Papier oder Lackschicht.

In einer bevorzugten Ausführungsform ist die Flüssigkeilsspeicherschicht bzw. die Flüssigkeit abgebende Schicht zwischen der Schicht, die den Farbstoff enthält und der Deckschicht eine derartige Anordnung ist mit dem Vorteil verbunden, dass die die Flüssigkeit abgebende Schicht im normalen Zustand der Anzeigevorrichtung ais Sichtschutz dienen kann (beispielsweise wenn eine Wollwachs-Wasser-Mischung verwendet wird), da diese opake Schicht die den Farbstoff enthaltende Schicht abdeckt. Dadurch ist der eine Signalwirkung entfaltende Farbstoff im ordnungsgemäßen Zustand der Anzeigevorrichtung von außen für den Betrachter nicht sichtbar. Bei Überschreiten des Temperatur-Schwellenwertes wird der Farbstoff gelöst und die Anzeigevorrichtung verfärbt sich um die Flüssigkeitsspeicherschicht herum (im Falle von beispielsweise Wachs-Wasser) oder durch diese hindurch. Dieses veränderte Aussehen ist dann von außen als Signal sichtbar.

Gemäß einer alternativen Ausführungsform ist die den Farbstoff enthaltende Schicht zwischen der Flüssigkeitsspeicherschicht und der Deckschicht angeordnet. In diesem Fall ist zwar die durch die den Farbstoff enthaltende Schicht gebildete farbige Markierung von außen sichtbar. Allerdings weist diese dadurch gebildete Markierung im normalen Zustand der Anzeigevorrichtung klar definierte Grenzen auf. Sobald jedoch bei Überschreiten des Temperatur-Schwellenwertes die Flüssigkeitsspeicherschicht Flüssigkeit abgibt und diese den Farbstoff löst, verschwimmen die Grenzen, und auch diese Änderung der Erscheinung der Anzeigevorrichtung ist von außen als Signal gut sichtbar.

Optional kann direkt unterhalb der Deckschicht oder auch zwischen der Farbstoffschicht und der Flüssigkeitsspeicherschicht eine Zwischenlage aus saugfähigem Material, wie etwa aus Papier, Stoff oder einem Pulver vorgesehen sein. Auch eine netzartige Schicht kann alternativ vorgesehen sein. Eine solche Zwischenlage dient im normalen Zustand der Anzeigevorrichtung als "Sichtschutz", bewirkt jedoch eine hohe Signalwirkung sobald Farbstoff gelöst ist, da die Verteilung der Farbe gleichmäßiger erfolgt.

Ein weiterer Aspekt der Erfindung betrifft eine Verpackung, insbesondere eine Gefriergutverpackung, die mit einer erfindungsgemäßen Anzeigevorrichtung versehen ist. Die erfindungsgemäße Anzeigevorrichtung kann dabei beispielsweise mit ihrer Trägerfolie auf die Verpackung aufgeklebt sein. Alternativ dazu wird die Anzeigevorrichtung direkt auf die Verpackung aufgebracht, so dass die Verpackung als Trägerschicht wirkt.

Ein weiterer Aspekt der Erfindung betrifft ein Verfahren zur Herstellung einer erfindungsgemäßen Anzeigevorrichtung nach dem Anspruch 12. Bei dem erfindungsgemäßen Verfahren wird zunächst eine einen Farbstoff enthaltende Schicht auf eine Trägerschicht aufgetragen, wobei der Farbstoff in einer Flüssigkeit lösbar ist. Danach wird auf die Farbstoffschicht eine Flüssigkeitsspeicherschicht aufgetragen, d.h. eine Schicht, die eine Flüssigkeit derart enthält, dass diese bei Überschreitung eines vorher festgelegten Temperatur-Schwellenwertes abgegeben bzw. freigegeben wird. Abschließend wird darauf eine Deckschicht aufgetragen. Gemäß einer alternativen Ausführungsform liegen die Farbstoffschicht und die Flüssigkeitsspeicherschicht in umgekehrter Reihenfolge vor.

Das Auftragen der den Farbstoff enthaltenden Schicht auf eine Trägerschicht geschieht vorzugsweise durch Aufsprühen des entsprechenden Materials auf die Trägerschicht und anschließendes Trocknen. Dabei kann die Farbstoffschicht die Trägerschicht vollständig bedecken. Alternativ dazu ist die Trägerschicht nur teilweise von der Farbstoffschicht bedeckt. So kann beispielsweise für eine einzelne Anzeigevorrichtung die Trägerschicht eine quadratische oder rechteckige Form aufweisen, während die Farbstoffschicht darauf kreisförmig aufgebracht wird.

Die Erfindung wird nun unter Bezugnahme auf die beigefügten Zeichnungen näher erläutert. Es zeigt:
- Fig.: 1 eine Explosionsdarstellung eines Beispiels der erfindungsgemäßen Anzeigevorrichtung; und

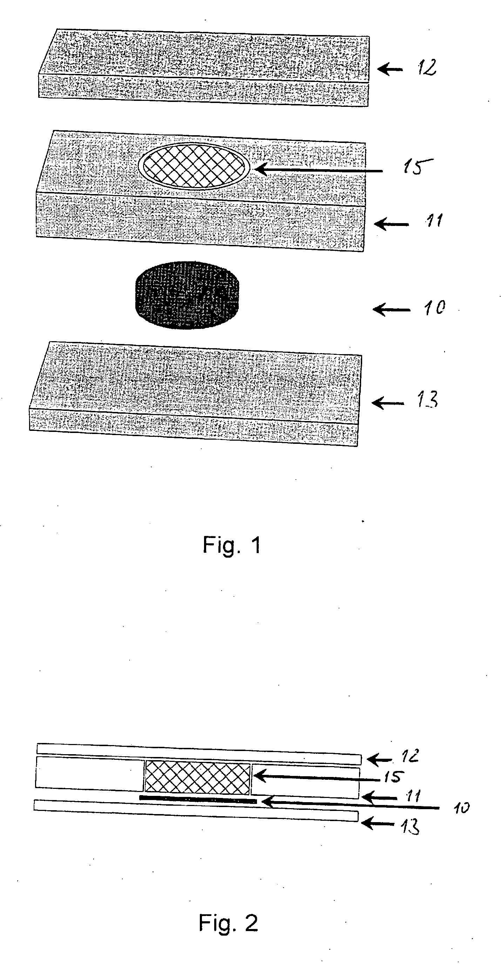

- Fig. 2: eine Schnittansicht der Anzeigevorrichtung von Fig. 1.

Bei dem in Fig. 1 gezeigten Beispiel der erfindungsgemäßen Anzeigevorrichtung wird eine Trägerfolie 13 mit einer in etwa kreisförmig ausgebildeten Farbstoffschicht 10 versehen. Darüber ist die Flüssigkeitsspeicherschicht 11 vorgesehen. In dem gezeigten Beispiel weist diese Flüssigkeitsspeicherschicht einen netz- bzw. wabenartigen Abschnitt 15 auf, der mit dem Flüssigkeitsspeichermaterial (beispielsweise Wollwachs-Wasser-Mischung) gefüllt ist. Als Abschluss ist darüber eine Deck- bzw. Schutzfolie 12 vorgesehen.

Dieser Aufbau ist auch der Schnittdarstellung von Fig. 2 zu entnehmen.

Anstelle der netz- bzw. wabenartigen Struktur der in den Figuren 1 und 2 dargestellten Schicht 11 kann die Flüssigkeitsspeicherschicht, beispielsweise in Form einer Wollwachs-Wasser-Mischung, direkt die Farbstoffschicht überdeckend aufgetragen sein.

### Beispiel 1

Es wurde eine erfindungsgemäße Anzeigevorrichtung folgenden Aufbaus erstellt: Trägerfolie, Agar-Farbstoff-Schicht, Wollwach-Wasser-Mischungsschicht (Wollwachs Cera Lanae der Firma Brenntag Cee GmbH), Deckschicht. In diesem Beispiel lag die Wollwachs-Wasser-Mischung im Verhältnis 1:6 vor.

Die Anzeigevorrichtung wurde in Form eines Etiketts auf eine Verpackung von 300g Tiefkühlerbsen von außen aufgeklebt. Die Verpackung wurde mit einer Ausgangstemperatur von -18°C in eine Klimakammer mit konstanter Temperatur von +20°C gebracht. Eine Verfärbung trat nach 165 Minuten auf.

### Beispiel 2

Es wurde eine Anzeigevorrichtung gemäß Beispiel 1 hergestellt mit dem einzigen Unterschied, dass die Wollwachs-Wasser-Mischung im Verhältnis 1:5 vorlag. Auch diese Anzeigevorrichtung wurde in Form eines Etiketts auf eine Verpackung von 300g Tiefkühlerbsen von außen aufgeklebt. Die Verpackung wurde Ausgangstemperatur von -18°C in eine Klimakammer mit konstanter Temperatur von +20°C gebracht. Eine Verfärbung trat nach 240 Minuten auf.

## Patentansprüche

1. Vorrichtung zur irreversiblen Anzeige einer nicht ordnungsgemäßen zeitweiligen Überschreitung der Lagerhöchsttemperatur eines Gutes, insbesondere eines Gefriergutes, mit:
einer einen Farbstoff enthaltenden Schicht (10), wobei der Farbstoff in Flüssigkeit lösbar ist;
einer bei Überschreitung eines vorher festgelegten Temperatur-Schwellenwertes eine Flüssigkeit abgebenden Schicht (11), und
einer Deckschicht (12), **dadurch gekennzeichnet daß**, die eine Flüssigkeit abgebende Schicht (11) aus einer Wollwachs-Flüssigkeit-Mischung besteht.

2. Vorrichtung nach Anspruch 1, wobei die eine Flüssigkeit abgebende Schicht (11) zwischen der einen Farbstoff enthaltenden Schicht (10) und der Deckschicht (12) angeordnet ist.

3. Vorrichtung nach Anspruch 1, wobei die einen Farbstoff enthaltende Schicht (10) zwischen der eine Flüssigkeit abgebenden Schicht (11) und der Deckschicht (12) angeordnet ist.

4. Vorrichtung nach Anspruch 1, 2 oder 3, ferner mit einer Zwischenlage aus saugfähigem Material zwischen der Deckschicht (12) und der unmittelbar darunter liegenden Schicht oder zwischen der einen Farbstoff enthaltenden Schicht (10) und der eine Flüssigkeit abgebenden Schicht (11).

5. Vorrichtung nach einem der vorstehenden Ansprüche, ferner mit einer Trägerschicht (13).

6. Vorrichtung nach Anspruch 5, wobei die Trägerschicht (13) zumindest teilweise von der einen Farbstoff enthaltenden Schicht (10) bedeckt ist.

7. Vorrichtung nach Anspruch 1, wobei die eine Flüssigkeit abgebende Schicht (11) zumindest teilweise eine gitter-, netz-, wabenartige oder gewebte Struktur aufweist, zur Aufnahme des die Flüssigkeit abgebenden Materials darin.

8. Vorrichtung nach einem der vorstehenden Ansprüche, wobei das Material der Flüssigkeit abgebenden Schicht (11) eine Verzögerungsfunktion bereitstellt.

9. Vorrichtung nach einem der vorstehenden Ansprüche, wobei die einen Farbstoff enthaltende Schicht (10) gebildet ist durch: Lebensmittelfarbe, Farbpulver, Wasserfarbe, Polysacharid-Farbstoff-Mischung, insbesondere Agar-Agar-Farbstoff-Mischung, Gelatine-Farbstoff-Mischung, Stärke-Farbstoff-Mischung, Indikatorfarbe, Phenolphthalein.

10. Verpackung, insbesondere Gefriergutverpackung, mit einer Anzeigevorrichtung nach einem der Ansprüche 1 bis 9.

11. Verpackung nach Anspruch 10, wobei die Trägerschicht (13) durch die Oberfläche der Verpackung des Gutes gebildet ist.

12. Verfahren zur Herstellung einer Vorrichtung zur irreversiblen Anzeige einer nichtordnungsgemäßen zeitweiligen Überschreitung der Lagerhöchsttemperatur eines Gutes, mit den Schritten:
Auftragen einer einen Farbstoff enthaltenden Schicht auf eine Trägerschicht, wobei der Farbstoff in Flüssigkeit lösbar ist;
Auftragen einer bei Überschreitung eines vorher festgelegten Temperatur-Schwellenwertes eine Flüssigkeit abgebenden Schicht auf die einer Farbstoff enthaltende Schicht, und
Auftragen einer Deckschicht,
**dadurch gekennzeichnet, daß** die eine Flüssigkeit abgebende Schicht aus einer Wollwachs-Flüssigkeit-Mischung besteht.

## Claims

1. A device for irreversibly displaying an undue temporary overstepping of the maximum storage temperature of items, in particular frozen items, comprising:
a layer (10) comprising a dye, the dye being liquid-soluble;
a layer (11) that releases a liquid when a predetermined temperature threshold is exceeded; and
a cover layer (12), **characterised in that** the liquid-releasing layer (11) consists of a wool wax-liquid mixture.

2. The device according to claim 1, wherein the liquid-releasing layer (11) is sandwiched between the layer (10) comprising a dye and the cover layer (12).

3. The device according to claim 1, wherein the layer (10) comprising a dye is sandwiched between the liquid-releasing layer (11) and the cover layer (12).

4. The device according to claim 1, 2 or 3, further comprising an intermediate layer of an absorbent material between the cover layer (12) and the layer directly underneath it or between the layer (10) comprising a dye and the liquid-releasing layer (11).

5. The device according to any of the preceding claims, further comprising a carrier layer (13).

6. The device according to claim 5, wherein the carrier layer (13) is at least partially covered by the layer (10) comprising a dye.

7. The device according to claim 1, wherein the liquid-releasing layer (11) has at least in part a latticed, meshed, honeycombed or woven structure for receiving the liquid-releasing material.

8. The device according to any of the preceding claims, wherein the material of the liquid-releasing layer (11) provides a delay function.

9. The device according to any of the preceding claims, wherein the layer (10) comprising a dye is formed by: food dye, dye powder, water colour, a polysaccharide-dye mixture, in particular an agar-agar-dye mixture, a gelatine-dye mixture, a starch-dye mixture, a colour indicator, phenolphthalein.

10. A packaging, in particular a frozen item packaging, comprising a display device according to any of claims 1 to 9.

11. The packaging according to claim 10, wherein the carrier layer (13) is formed by the surface of the packaging of the item.

12. A method of producing a device for irreversibly displaying an undue temporary overstepping of the maximum storage temperature of an item, comprising the steps of:
applying a layer comprising a dye onto a carrier layer, wherein the dye is liquid-soluble;
applying a layer that releases a liquid when a predetermined temperature threshold is exceeded onto the layer comprising a dye; and
applying a cover layer,
**characterised in that** the liquid-releasing layer consists of a wool wax-liquid-mixture.

## Revendications

1. Dispositif pour l'indication irréversible d'un dépassement temporaire anormal de la température maximale de stockage d'un produit, en particulier d'une denrée congelée, comportant :
une couche (10) contenant un colorant, ledit colorant étant soluble dans un liquide ;
une couche (11) délivrant un liquide en cas de dépassement d'une valeur limite de température préalablement fixée, et
une couche de couverture (12), **caractérisé en ce que** la couche (11) délivrant un liquide est constituée d'un mélange cire de laine-liquide.

2. Dispositif selon la revendication 1, où la couche (11) délivrant un liquide est disposée entre la couche (10) contenant un colorant et la couche de couverture (12).

3. Dispositif selon la revendication 1, où la couche (10) contenant un colorant est disposée entre la couche (11) délivrant un liquide et la couche de couverture (12).

4. Dispositif selon la revendication 1, 2 ou 3, comportant en outre une couche intercalaire en matériau absorbant entre la couche de couverture (12) et la couche immédiatement inférieure, ou entre la couche (10) contenant un colorant et la couche (11) délivrant un liquide.

5. Dispositif selon l'une des revendications précédentes, comportant en outre une couche support (13).

6. Dispositif selon la revendication 5, où la couche support (13) est au moins partiellement recouverte par la couche (10) contenant un colorant.

7. Dispositif selon la revendication 1, où la couche (11) délivrant un liquide présente au moins partiellement une structure en treillis, réseau, alvéolaire ou tissée destinée à contenir le matériau délivrant le liquide.

8. Dispositif selon l'une des revendications précédentes, où le matériau de la couche (11) délivrant un liquide présente une fonction de temporisation.

9. Dispositif selon l'une des revendications précédentes, où la couche (10) contenant un colorant est constituée de :
colorant alimentaire, poudre colorante, peinture à l'eau, mélange polysaccharide-colorant, en particulier mélange agar-agar-colorant, mélange gélatine-colorant, mélange amidon-colorant, encre indicatrice, phénolphtaléine.

10. Emballage, en particulier emballage de denrée congelée, avec un dispositif indicateur selon l'une des revendications 1 à 9.

11. Emballage selon la revendication 10, où la couche support (13) est formée par la surface de l'emballage du produit.

12. Procédé de fabrication d'un dispositif pour l'indication irréversible d'un dépassement temporaire anormal de la température maximale de stockage d'un produit, comportant les étapes suivantes :
application d'une couche contenant un colorant sur une couche support, le colorant étant soluble dans un liquide ;
application sur la couche contenant un colorant d'une couche délivrant un liquide en cas de dépassement d'une valeur limite de température préalablement fixée, et
application d'une couche de couverture,
**caractérisé en ce que** la couche (11) délivrant un liquide est constituée d'un mélange cire de laine-liquide.
